# EUROPEAN PATENT SPECIFICATION

(11) **EP 3 143 920 B1**
(45) Date of publication and mention of the grant of the patent: **16.05.2018**
(21) Application number: 15425071.6
(22) Date of filing: 18.09.2015
(51) Int. Cl.: A47L 15/00, A47L 15/42

(54) **INDUSTRIAL DISHWASHER WITH HEAT-RECOVERY SYSTEM**
GEWERBLICHE GESCHIRRSPÜLMASCHINE MIT EINEM WÄRMERÜCKGEWINNUNGSSYSTEM
LAVE-VAISSELLE INDUSTRIEL AVEC UN SYSTÈME DE RÉCUPÉRATION DE CHALEUR

(43) Date of publication of application: 22.03.2017
(73) Proprietor: Bonferraro S.p.A., 37060 Bonferraro (VR) (IT)
(72) Inventor: AMBROSI, Andrea, 37052 Casaleone (VR) (IT); ZINETTI, Andrea, 37058 Sanguinetto (VR) (IT)
(74) Representative: Concone, Emanuele

(56) References cited:
- EP-A1- 2 873 466
- WO-A1-2010/120657
- US-A1- 2010 024 844

## Description

The present invention relates to industrial dishwashers, and in particular to a dishwasher with an improved heat-recovery system aimed at a more effective exploitation of the heat of the air contained in the wash chamber.

It is known that industrial dishwashers used in professional fields (restaurants, bars, etc.) are capable of washing dishes within extremely reduced times, thanks to some constructional features that make them different from domestic dishwashers in various respects. In particular, thanks to the presence of two distinct wash and rinse circuits each having its own sprinklers, the wash water is sprayed onto the dishes by a wash pump and during the rinse a portion of this water is replaced by rinse water pre-heated in a boiler and fed to the rinse circuit by a specific rinse pump.

In order to reduce the energy consumption and the heating time of the water, an industrial dishwasher usually includes a heat-recovery system for pre-heating the mains water used by the dishwasher. Such a system typically exploits the passage of hot air that is sucked from the wash chamber and flows through a heat exchanger before being exhausted from the dishwasher. The heat exchanger is typically placed in the rear wall of the fixed lower part of a hood-type dishwasher, but in other types of dishwasher it can be located above the wash chamber such as in WO 2010/120657 and EP 2873466 relating to box-type dishwashers. The heat exchange can take place at the end of the wash cycle, typically in the drying phase, as described in DE-102005046733-A1 or even during a washing phase as described in EP 1690489A2. Another possibility is the heat exchange with the hot cleaning or rinsing water upon draining thereof, as disclosed in US 2010/024844 relating to a conveyor-type dishwasher.

These prior art dishwashers have various drawbacks, due to their structure and their operation, which limit the amount of heat recovered and thus their energy efficiency and/or involve an undesirable greater duration of the wash cycle.

A first type of drawback stems from the extreme brevity of the washing phase, that has a duration of the order of 1-2 minutes, which does not allow to adequately preheat in the heat exchanger the mains water to be used in the subsequent rinsing phase but at the expense of a lengthening of the operating cycle. In fact, after the hot water present in the boiler has been loaded in the chamber for the washing phase, the boiler has to be recharged to heat the rinse water and this can be done in a more or less short time. If the load is fast the water that passes through the heat exchanger does not have the possibility to heat up significantly and the recovery of heat is low, if the load is slow the water absorbs more heat but when it reaches the boiler there is not enough time to heat it to the desired temperature before the washing phase ends with consequent lengthening of the duration of the operating cycle (which is a serious drawback for a professional dishwasher).

A second type of drawback derives from the fact that the heat exchanger is positioned outside the wash chamber and comes into contact with the hot air only when the latter is extracted from the wash chamber by means of a specific fan. This heat-recovery system involves not only problems of encumbrance of the heat exchanger on the rear or top of the machine, but also the fact that the air temperature decreases in the path from the wash chamber to the heat exchanger and also due to the rapid introduction into the dishwasher of a large amount of external air that causes a fast cooling of the air contained in the wash chamber.

In fact, upon activation of the fan that causes the passage of air through the exchanger, the hot air in the wash chamber is inevitably mixed with much cooler room temperature air that enters through slots or passages suitably formed to prevent the wash chamber from having a negative pressure. Tests carried out by the applicant have led to the estimate that usually the mixing of hot air and room temperature air takes place with an estimated ratio of 40-50% of hot air and 50-60% of room temperature air. This means that when the air inside the wash chamber is at about 65°C and the outside environment is at about 23°C, the mixed air entering the heat exchanger is at about 40-41°C whereas the air at the outlet of the exchanger where the mains water enters at 15-20°C is discharged at about 27-28°C. In these conditions it is clear that the heat exchange and therefore the heat recovery is limited, due to the small difference in temperature between the air entering the exchanger and the water coming from the mains.

Moreover, it must be considered that the water to be heated remains in the heat exchanger only for a short time for the above reasons, and that the fan operating time is usually short in order to not excessively extend the duration of the dishwasher operating cycle (and the heat exchanger receives hot air only when the fan is in operation).

The object of the present invention is therefore to provide an industrial dishwasher which overcomes these drawbacks. Said object is achieved by means of an industrial dishwasher provided with a heat-recovery system in which a water accumulator is arranged between the boiler and the heat exchanger that is located inside the wash chamber, preferably at its top. Other advantageous features of the present industrial dishwasher are specified in the dependent claims.

The main advantage of the dishwasher according to the present invention is to perform a more effective heat recovery without lengthening the duration of the operating cycle, since the boiler is reloaded immediately with pre-heated water already previously loaded into the accumulator even if the mains water is loaded slowly to maximize the heat exchange in the heat exchanger.

A second important advantage resulting from this configuration is the possibility of keeping the boiler always full or nearly full at any stage of the operating cycle, whereby the water therein can be heated continuously without any waiting phase so as to reduce the duration of the cycle. Alternatively, the cycle length may remain unchanged but the boiler may have a less powerful resistor given that it has more time to heat the water.

A further advantage of this dishwasher derives from the possibility of performing continuously the heat exchange between the hot air in the wash chamber and the mains water without waiting for the phases of operation of the fan and without lowering of the air temperature. This also allows a further recovery of heat in the pause periods of the dishwasher during which the water in the wash chamber is maintained at 60°C, ready for subsequent wash cycles.

Yet another advantage of the present dishwasher is that of having easy access to the heat exchanger to clean it in order to maintain the maximum efficiency of heat exchange, which on the contrary declines in conventional dishwashers where the heat exchanger is not cleaned because accessing it is difficult if not almost impossible.

These and other advantages and characteristics of the industrial dishwasher according to the present invention will become apparent to those skilled in the art from the following detailed description of an embodiment thereof with reference to the accompanying drawings in which:
Fig.1 is a schematic diagram showing the connections between the main components of an industrial dishwasher according to the present invention;
Fig.2 is a schematic diagram similar to the previous one which shows a possible simplified variant of the above dishwasher; and
Fig.3 is a schematic side view of the above dishwasher showing the preferred placement of the heat exchanger.

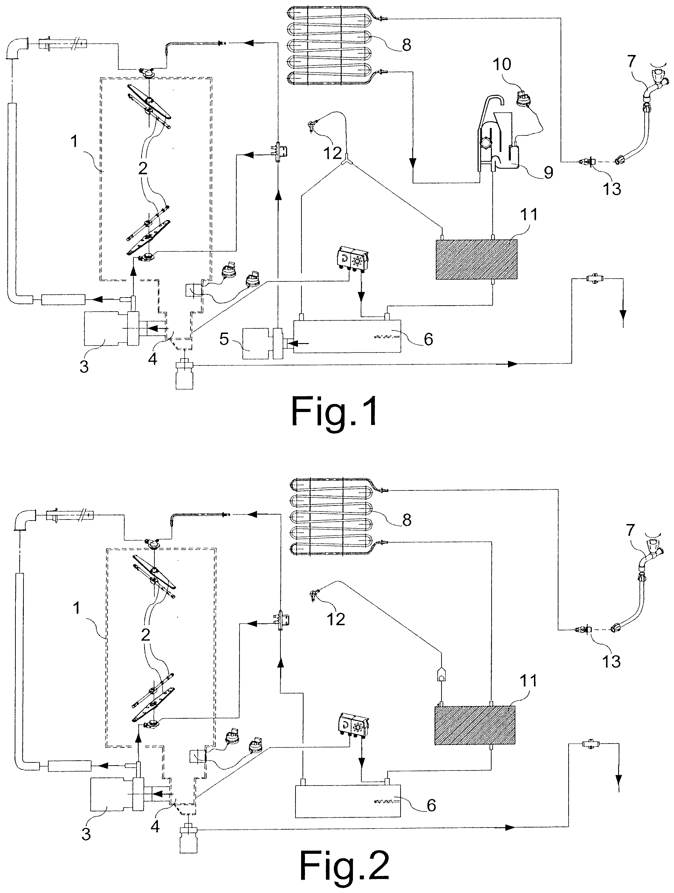

Referring to Fig.1, there is seen that an industrial dishwasher conventionally includes a wash chamber 1 in which are arranged the wash and rinse sprinklers 2 fed respectively by a wash pump 3, connected to the collecting sump 4, and by a rinse pump 5 connected to a boiler 6. For heat recovery, the mains water coming from a tap 7 is loaded in boiler 6 after passing through a heat exchanger 8 and an air gap 9, which also includes a pressure switch 10 that detects the filling of boiler 6.

An accumulator 11 is disposed between the heat exchanger 8 and boiler 6 along the water supply circuit, more specifically between the air gap 9 and boiler 6 so that the pressure switch 10 detects the filling of boiler 6 and of accumulator 11. Note that boiler 6 and accumulator 11 are advantageously connected to a common vent 12.

In this way, the water pre-heated in the heat exchanger 8 is stored not only in boiler 6 but also in accumulator 11, which can quickly reload boiler 6 as soon as the latter feeds water to sprinklers 2 even if the load valve 13 that controls the entry of the mains water is not open. Consequently, as mentioned earlier, boiler 6 is always full or nearly full and can work continuously to have hot water always available without any waiting period, while the mains water can be loaded slowly to remain longer in the heat exchanger 8 and to absorb a greater amount of heat.

The capacity of accumulator 11 can vary depending on the needs and in general will be lower than the capacity of boiler 6, since the latter is never completely emptied and in any case the load valve 13 can be opened to feed more water even while boiler 6 feeds hot water to sprinklers 2. In particular, the capacity of accumulator 11 is preferably at least equal to the amount of water used in the rinsing step, but it may also be equal to half of this amount when using the simultaneous loading of water as mentioned above.

A simplified version of the present dishwasher is illustrated in the diagram of Fig.2 which differs from the diagram of Fig.1 for the absence of the rinse pump 5 and of the air gap 9 with the relative pressure switch 10. In this case the water is delivered by boiler 6 to sprinklers 2 simply by opening the load valve 13 so that the water coming from tap 7 pushes out the water present in boiler 6, which therefore is not connected to vent 12. Obviously, such a configuration greatly reduces the heat recovery in the heat exchanger 8, since the water must be loaded quickly enough to ensure the proper functioning of the rinsing sprinklers. Furthermore it is clear that the filling of boiler 6 and accumulator 11 is detected by another sensor, not shown in the diagram.

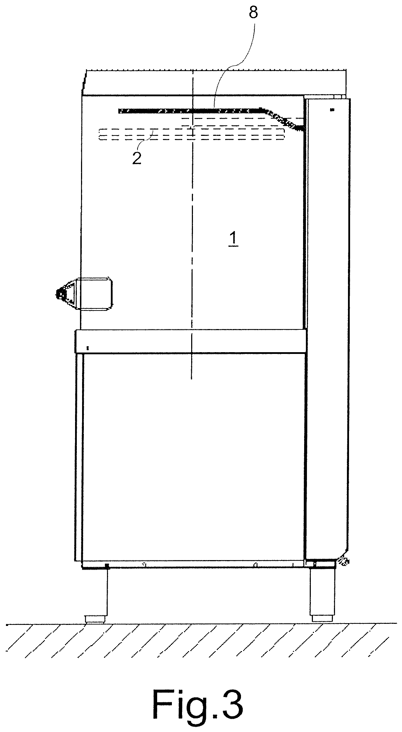

A novel aspect of the present industrial dishwasher resides in the position of the heat exchanger 8 inside the wash chamber 1. In particular, in the preferred embodiment illustrated in Fig.3, the heat exchanger 8 is placed at the top of the wash chamber 1 above sprinklers 2 so as to perform the heat exchange with the hottest air, which is gathered in this position, and to minimize its exposure to the dirt removed from the dishes.

Note that thanks to the greater efficiency of the heat-recovery system of the present dishwasher it is possible to obtain a higher temperature at the outlet from the heat exchanger 8, thus reducing the heating time in boiler 6 and the total duration of the operating cycle of the dishwasher. In this regard, it is preferable that the load of the water occurs making maximum use of the time available, i.e. as slowly as possible, making sure that the water load phase has a duration substantially equal to that of a phase of the wash cycle.

For example, assuming that the load valve 13 has a flow rate of 6 liters/min and that accumulator 11 has a capacity of 3 liters, filling it will take 30 seconds that can be distributed along the duration of a wash step so as to maximize the heat exchange. If the heat exchanger 8 has a capacity of 0,3 liters and the wash phase lasts 90 seconds, the load valve 13 can be opened for 10 periods of 3 seconds each followed by a pause of 6 seconds. In this way, in each opening period of the load valve 13 the water in the heat exchanger 8 is pushed towards accumulator 11 after having been pre-heated and is replaced by other water coming from tap 7.

Obviously the opening and closing times of the load valve 13 can be freely programmed depending on the structural and operating parameters of the machine, i.e. flow rate of the load valve 13, amount of water to be loaded, capacity of the heat exchanger 8, duration of the various phases of the operating cycle, etc. Furthermore, if the fill level sensor indicates that boiler 6 and accumulator 11 are already filled water load phase is stopped and therefore has a duration shorter than that of the corresponding phase of the wash cycle during which the water was loaded.

It is clear that the above-described and illustrated embodiment of the dishwasher according to the invention is just an example susceptible of various modifications. In particular, the exact shape and arrangement of the elements could be changed according to specific manufacturing needs, for example by varying the position of the heat exchanger 8, yet always inside the wash chamber 1, as long as accumulator 11 is arranged between the heat exchanger 8 and boiler 6.

## Claims

1. Industrial dishwasher comprising a wash chamber (1), in which there are arranged wash and rinse sprinklers (2), as well as a heat-recovery system comprising a heat exchanger (8) which receives through a load valve (13) mains water that after passing through said heat exchanger (8) is loaded into a boiler (6) connected to said sprinklers (2), and a water accumulator (11) arranged between the heat exchanger (8) and said boiler (6) along the water supply circuit, **characterized in that** the heat exchanger (8) is located inside the wash chamber (1).

2. Industrial dishwasher according to claim 1, **characterized in that** the heat exchanger (8) is located at the top of the wash chamber (1) above the sprinklers (2).

3. Industrial dishwasher according to any of the preceding claims, **characterized in that** the accumulator (11) has a capacity equal at least to half of the amount of water required for the rinse phase, preferably at least equal to said amount of water.

4. Industrial dishwasher according to any of the preceding claims, **characterized in that** it further includes an air gap (9) between the heat exchanger (8) and the accumulator (11).

5. Industrial dishwasher according to claim 4, **characterized in that** the air gap (9) also comprises a pressure switch (10) suitable to detect the filling of the boiler (6) and of the accumulator (11).

6. Industrial dishwasher according to any of the preceding claims, **characterized in that** the boiler (6) and the accumulator (11) have a common vent (12).

7. Operating method of an industrial dishwasher according to any of the preceding claims, **characterized in that** the mains water is loaded by alternating periods of opening and closing of the load valve (13) whose overall duration is substantially equal to or less than the duration of a phase of the wash cycle.

8. Operating method according to claim 7, **characterized in that** the quantity of water loaded in each opening period of the load valve (13) corresponds substantially to the capacity of the heat exchanger (8).

## Patentansprüche

1. Gewerbliche Geschirrspülmaschine, umfassend eine Waschkammer (1), in welcher Wasch- und Spülsprinkler (2) angeordnet sind, sowie ein Wärmerückgewinnungssystem mit einem Wärmetauscher (8), welcher durch ein Beschickungsventil (13) Leitungswasser erhält, das nach Durchlaufen durch den Wärmetauscher (8) in einen Boiler (6) gelangt, der an den besagten Sprinklern (2) angeschlossen ist, und einen Wasserspeicher (11), der zwischen dem Wärmetauscher (8) und dem besagten Boiler (6) entlang des Wasserversorgungskreislaufs angeordnet ist, **dadurch gekennzeichnet, dass** der Wärmetauscher (8) sich im Inneren der Waschkammer (1) befindet.

2. Gewerbliche Geschirrspülmaschine gemäß Anspruch 1, **dadurch gekennzeichnet, dass** sich der Wärmetauscher (8) am oberen Ende der Waschkammer (1) befindet, oberhalb der Sprinkler (2).

3. Gewerbliche Geschirrspülmaschine gemäß einem der vorhergehenden Ansprüchen, **dadurch gekennzeichnet, dass** der Speicher (11) ein Fassungsvermögen besitzt, das wenigstens gleich der Hälfte derjenigen Wassermenge ist, die für die Spülphase benötigt wird, bevorzugt wenigstens gleich der besagten Wassermenge.

4. Gewerbliche Geschirrspülmaschine gemäß einem der vorhergehenden Ansprüche, **dadurch gekennzeichnet, dass** sie ferner einen Luftspalt (9) zwischen dem Wärmetauscher (8) und dem Speicher (11) umfasst.

5. Gewerbliche Geschirrspülmaschine gemäß Anspruch 4, **dadurch gekennzeichnet, dass** der Luftspalt (9) auch einen Druckschalter (10) aufweist, der dazu geeignet ist, die Befüllung des Boilers (6) und des Speichers (11) zu erkennen.

6. Gewerbliche Geschirrspülmaschine gemäß einem der vorhergehenden Ansprüche, **dadurch gekennzeichnet, dass** der Boiler (6) und der Speicher (11) eine gemeinsame Entlüftung besitzen.

7. Verfahren zum Betrieb einer gewerblichen Geschirrspülmaschine gemäß einem der vorhergehenden Ansprüche, **dadurch gekennzeichnet, dass** das Leitungswasser durch abwechselnde Öffnungs- und Schließperioden des Beschickungsventils (13) eingefüllt wird, deren Gesamtdauer substantiell gleich der Dauer einer Phase des Waschzyklus ist oder kleiner als jene.

8. Betriebsverfahren gemäß Anspruch 7, **dadurch gekennzeichnet, dass** die Menge des Wassers, welche bei jeder Öffnungsperiode des Beschickungsventils (13) eingefüllt wird, substantiell dem Fassungsvermögen des Wärmetauschers (8) entspricht.

## Revendications

1. Lave-vaisselle industriel comprenant une chambre de lavage (1), dans laquelle sont agencés des jets de lavage et de rinçage (2), ainsi qu'un système de récupération de chaleur comprenant un échangeur de chaleur (8) qui reçoit, par le biais d'une valve de charge (13), l'eau courante qui, après être passée par ledit échangeur de chaleur (8), est chargée dans une chaudière (6) raccordée auxdits jets (2), et un accumulateur d'eau (11) agencé entre l'échangeur de chaleur (8) et ladite chaudière (6) le long du circuit d'alimentation en eau, **caractérisé en ce que** l'échangeur de chaleur (8) est positionné à l'intérieur de la chambre de lavage (1).

2. Lave-vaisselle industriel selon la revendication 1, **caractérisé en ce que** l'échangeur de chaleur (8) est positionné sur le dessus de la chambre de lavage (1) au-dessus des jets (2).

3. Lave-vaisselle industriel selon l'une quelconque des revendications précédentes, **caractérisé en ce que** l'accumulateur (11) a une capacité égale à au moins un demi de la quantité d'eau requise pour la phase de rinçage, de préférence au moins égale à ladite quantité d'eau.

4. Lave-vaisselle industriel selon l'une quelconque des revendications précédentes, **caractérisé en ce qu'**il comprend en outre un espace d'air (9) entre l'échangeur de chaleur (8) et l'accumulateur (11).

5. Lave-vaisselle industriel selon la revendication 4, **caractérisé en ce que** l'espace d'air (9) comprend également un commutateur de pression (10) approprié pour détecter le remplissage de la chaudière (6) et de l'accumulateur (11).

6. Lave-vaisselle industriel selon l'une quelconque des revendications précédentes, **caractérisé en ce que** la chaudière (6) et l'accumulateur (11) ont un évent (12) commun.

7. Procédé de fonctionnement d'un lave-vaisselle industriel selon l'une quelconque des revendications précédentes, **caractérisé en ce que** l'eau courante est chargée en alternant des périodes d'ouverture et de fermeture de la valve de charge (13) dont la durée globale est sensiblement égale ou inférieure à la durée d'une phase du cycle de lavage.

8. Procédé de fonctionnement selon la revendication 7, **caractérisé en ce que** la quantité d'eau chargée dans chaque période d'ouverture de valve de charge (13) correspond sensiblement à la capacité de l'échangeur de chaleur (8).
